# EUROPEAN PATENT APPLICATION

(11) **EP 4 760 833 A1**
(43) Date of publication of application: **17.06.2026**
(21) Application number: 24882776.8
(22) Date of filing: 22.10.2024
(51) Int. Cl.: H01M 10/04, H01M 10/42, H01M 50/54, G01N 21/88, B23K 31/12

(54) **BATTERY CELL MANUFACTURING DEVICE, BATTERY CELL MANUFACTURING SYSTEM, AND BATTERY CELL MANUFACTURING METHOD**

(30) Priority: 24.10.2023 KR 20230142643
(71) Applicant: LG Energy Solution, Ltd., Seoul 07335 (KR)
(72) Inventor: LEE, Sang Ik, Daejeon 34122 (KR); LIM, Sang Hyun, Daejeon 34122 (KR); PARK, Jong Hyun, Daejeon 34122 (KR); YUN, Byeong Ho, Daejeon 34122 (KR); KIM, Min Su, Daejeon 34122 (KR); JUNG, Tae Kwang, Daejeon 34122 (KR)
(74) Representative: BCKIP Part mbB
(86) International application number: PCT/KR2024/016086
(87) International publication number: WO 2025/089749

(57) **Abstract**

Example embodiments provide a battery cell manufacturing apparatus. The battery cell manufacturing apparatus includes a first image obtaining part configured to obtain first images of first electrode assemblies including on one end an electrode tab stack of a first electrode and a first electrode lead welded to the electrode tab stack, a second image obtaining part configured to obtain a second image of a second electrode assembly judged to be available by a re-inspection among first electrode assemblies judged to be defective by an inspection based on the first images, an image matching device including an image matching part configured to compare the second image with the first images and extract a first image matching the second image, and an identifier (ID) allocation device configured to allocate an ID of a first electrode assembly corresponding to the first image matching the second image as an ID of the second electrode assembly.

A battery cell system including the battery cell manufacturing apparatus is also provided.

The present technology also provides a battery cell manufacturing method using image matching.

## Description

### [Technical Field]

The present invention relates to a battery cell manufacturing apparatus, a battery cell manufacturing system, and a battery cell manufacturing method.

The present application claims the benefit of priority based on Korean Patent Application No. 10-2023-0142643, filed on October 24, 2023, and the entire content of the Korean patent application is incorporated herein by reference.

### [Background Art]

Battery cells are manufactured by an electrode process, an assembly process, and an activation process. A plurality of manufactured battery cells are included in a battery module and a battery pack, which are larger units, to be used in an electric vehicle and the like.

Electrodes each including an electrode tab on one end thereof may be manufactured by notching a plurality of first electrodes (e.g., negative electrodes) and a plurality of second electrodes (e.g., positive electrodes) manufactured by the electrode process. Unit cells such as half-cells, mono-cells, and bi-cells may be manufactured using the electrodes. A electrode and a separator are stacked in a half-cell, two electrodes with different polarities are stacked with a separator therebetween in a mono-cell, and two electrodes with the same polarity and one electrode with different polarity are stacked with a separator therebetween in a bi-cell. An electrode assembly referred to as a stack cell may be manufactured by stacking the unit cells.

Alternatively, an electrode assembly referred to as a folding cell may be manufactured by placing first electrodes and second electrodes in a long separator and sequentially folding the separator.

That is, the electrode assembly is an electrode assembly in which first electrodes and second electrodes are stacked with a separator therebetween. An electrode tab stack in which tabs of electrodes are stacked is provided at one end or opposite ends of the electrode assembly. For example, a so-called unidirectional electrode assembly including both negative electrode tabs and positive electrode tabs on one end is provided with an electrode tab stack of negative and positive electrodes on an end. A bidirectional electrode assembly including negative electrode tabs and positive electrode tabs on opposite ends is provided with a negative electrode tab stack on one end and positive electrode tab stack on another end.

An identifier (ID) may be allocated to an external surface of the electrode tab stack. The ID may include information about manufacturing history, e.g., lot numbers, each piece of process equipment, and production line information. Through the ID, traceability of a roll map and an intermediate product, such as a mono-cell or a bi-cell, which are generated in an electrode manufacturing process can be improved. In addition, traceability can be improved in terms of a relationship between an assembling process of an intermediate product and a subsequent process after the assembly process. Accordingly, the reliability of the manufacture of a battery may improve.

However, the ID may be lost when an electrode lead is welded to the electrode tab stack of the electrode assembly. In this case, intermediate products and a product cannot be tracked using the ID, making it impossible to secure quality traceability.

### [Related Art Literature]

### [Patent Document]

(Patent Document 0001) Korean Laid-open Patent Application No. 10-2023-0056291

### [Disclosure]

### [Technical Problem]

The present invention is directed to securing the traceability of an electrode assembly in which an identifier (ID) is lost.

### [Technical Solution]

To address the above problem, example embodiments of the present invention provide a battery cell manufacturing apparatus. The battery cell manufacturing apparatus includes a first image obtaining part configured to obtain first images of first electrode assemblies including on one end an electrode tab stack of a first electrode and a first electrode lead welded to the electrode tab stack, a second image obtaining part configured to obtain a second image of a second electrode assembly judged to be available by a re-inspection among first electrode assembles judged to be defective by an inspection based on the first image, an image matching device including an image matching part configured to compare the second image with first images and extract first images matching the second image, and an identifier (ID) allocation device configured to allocate an ID of a first electrode assembly corresponding to the first image matching the second image as an ID of the second electrode assembly.

The ID allocation device may be a controller of a series of continuous process lines for welding an electrode lead to an electrode included in an electrode assembly or a main controller included in the controller.

The ID allocation device may allocate a virtual ID to the second electrode assembly before the matching of the first image to the second image, and allocate the ID of the first electrode assemblies corresponding to the first image matching the second image as an ID of the second electrode assembly instead of the virtual ID.

The first image obtaining part may obtain the first image in connection with the ID of the first electrode assemblies, and the second image obtaining part may obtain the second image in connection with the virtual ID of the second electrode assembly.

The image matching part may compare and match the first image and the second image each including at least one of:
1) a shape of welded regions of the electrode tab stack of the first electrode and the first electrode lead;
2) a shape of wrinkles of a separator; and
3) a shape of a plurality of overlapping electrode tabs included in the electrode tab stack.

Example embodiments of the present invention provide a battery cell manufacturing system. The system includes: a first electrode cutter configured to cut a part of an electrode tab stack of a first electrode on which an ID is provided, the first electrode being on an end of an electrode assembly; a first welding device configured to weld a first electrode lead to a remaining part of the electrode tab stack to manufacture first electrode assemblies; a first electrode inspection camera configured to capture first images of the first electrode assemblies; and the battery cell manufacturing apparatus of claim 12.

The system may further include a second electrode cutter configured to cut at least one electrode tab stack among an electrode tab stack of a second electrode included in the first electrode assemblies judged to be a good-quality product by the controller and an electrode tab stack of a second electrode included in a second electrode assembly to which an ID of the first electrode assembly is allocated, a second welding device configured to weld a second electrode lead to a remaining part of the at least one electrode tab stack cut by the second electrode cutter, and a second electrode inspection camera configured to capture images of the first electrode assemblies to which the second electrode lead is welded and the second electrode assembly to which the second electrode lead is welded.

The system may further include a loader configured to load electrode assemblies on the first electrode cutter,
the electrode assemblies each including an ID on an electrode tab stack of a first electrode on one end, and an unloader configured to unload the first electrode assemblies judged to be defective by the first electrode inspection camera and electrode assemblies inspected by the second electrode inspection camera.

The system may further include a transfer device configured to move electrode assemblies between devices of a system installed between the loader and the unloader, and the transfer device may transfer the first electrode assemblies judged to be defective to the unloader by bypassing the second electrode cutter and the second welding device.

The system may further include a re-input device configured to re-input to a series of continuous process lines a second electrode assembly judged to be available by a re-inspection among the first electrode assemblies judged to be defective and discharged by the unloader.

An example embodiment provides a battery manufacturing method. The method includes: manufacturing first electrode assemblies by cutting a part of an electrode tab stack of a first electrode on an end of an electrode assembly and welding a first electrode lead to a remaining part of the electrode tab stack, wherein first electrodes and second electrodes are stacked on the electrode assembly with a separator interposed between the first and second electrodes; inspecting the first electrode assemblies, based on an obtained first image of the first electrode assemblies; comparing first images of first electrode assemblies with an obtained second image of a second electrode assembly judged to be available by a re-inspection among first electrode assemblies judged to be defective in the inspecting of the first electrode assemblies; and allocating an ID of a first electrode assembly corresponding to a first image matching the second image as an ID of the second electrode assembly.

The method may further include allocating a virtual ID to the second electrode assembly, and the virtual ID may be related to the second image.

The ID of the first electrode assembly corresponding to the first image matching the second image may be allocated as an ID of the second electrode assembly instead of the virtual ID.

According to example embodiments, the first image and the second image, which are compared and matched with each other, each include at least one shape of:
1) a shape of welded regions of the electrode tab stack of the first electrode and the first electrode lead;
2) a shape of wrinkles of a separator; and
3) a shape of a plurality of overlapping electrode tabs included in the electrode tab stack.

The first and second images are matched by allocating a weight to the at least one shape serving as a criterion for a comparison between the first and second images.

The battery cell manufacturing method may be performed in a series of continuous process lines.

First electrode assemblies judged to be a good-quality product in the inspecting of the first electrode assembly may be transferred to a process of welding an electrode tab stack of each of the second electrodes to a second electrode lead.

First electrode assemblies judged to be defective in the inspecting of the first electrode assembly may be discharged from the continuous process lines without performing the process of welding the electrode tab stack of each of the second electrodes to the second electrode lead.

The method may further include re-inspecting the first electrode assembly, which is judged to be defective and is discharged, and determining the first electrode assembly as a second electrode assembly to be re-input to the continuous process lines when the first electrode assembly is judged to be available.

The second electrode assembly may be re-input to the inspecting of the first electrode assemblies to obtain a second image or be re-input after the inspecting of the first electrode assemblies when the second image is obtained.

The second electrode assembly which is re-input and to which the ID of the first electrode assembly is allocated may be transferred to a process of welding the electrode tab stack of each of the second electrodes and the second electrode lead.

### [Advantageous Effects]

According to example embodiments of the present invention, the traceability of an electrode assembly can be ensured even when an identifier (ID) is lost in a series of continuous process lines. Accordingly, the reliability of the manufacture of a battery may improve.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIGS. 1 and 2 are a side cross-sectional view and a top view of a battery cell.
FIG. 3 is a diagram illustrating a stack cell and a folding cell.
FIG. 4 illustrates a transfer process of an electrode assembly.
FIG. 5 illustrates a series of continuous process lines according to an example embodiment.
FIG. 6 illustrates a battery cell manufacturing apparatus and a battery cell manufacturing system according to example embodiments.
FIG. 7 illustrates a first image of an upper surface and a lower surface of a first electrode assembly.
FIG. 8 illustrates a plurality of first images and a second image.
FIG. 9 illustrates a process of comparing and matching a first image with a second image.
FIG. 10 illustrates a series of continuous process lines according to an example embodiment.
FIG. 11 illustrates a battery cell manufacturing apparatus and a battery cell manufacturing system according to example embodiments.
FIG. 12 illustrates a battery cell manufacturing method according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

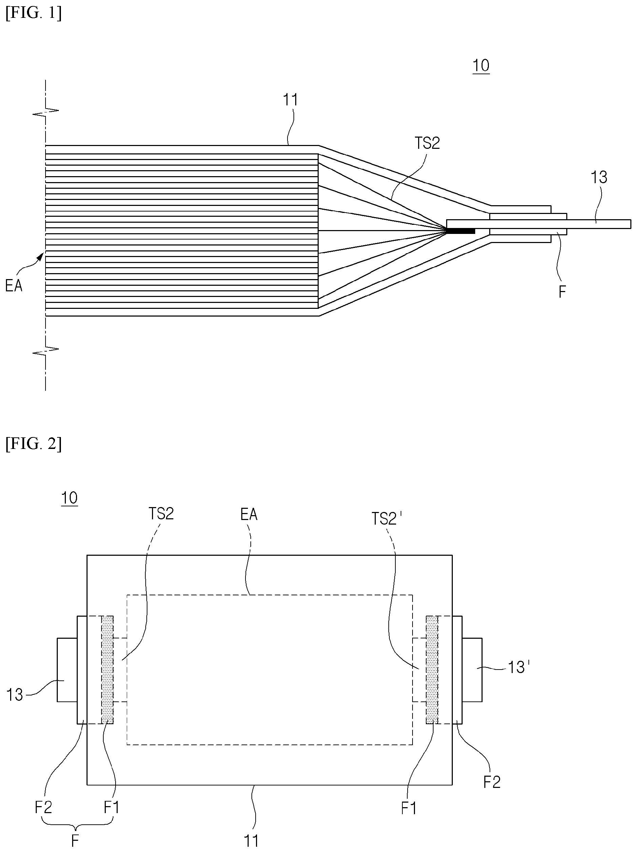

FIGS. 1 and 2 are a side cross-sectional view and a top view of a battery cell.

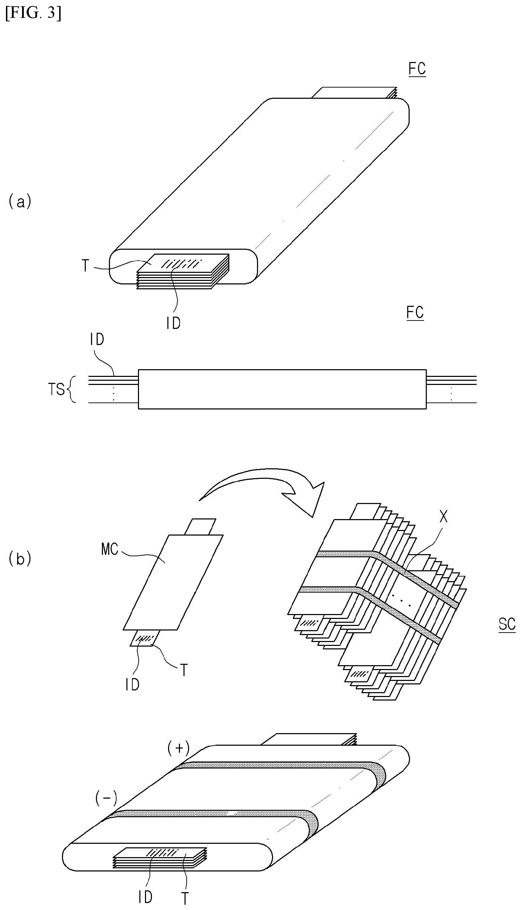

FIG. 3 is a diagram illustrating a stack cell and a folding cell.

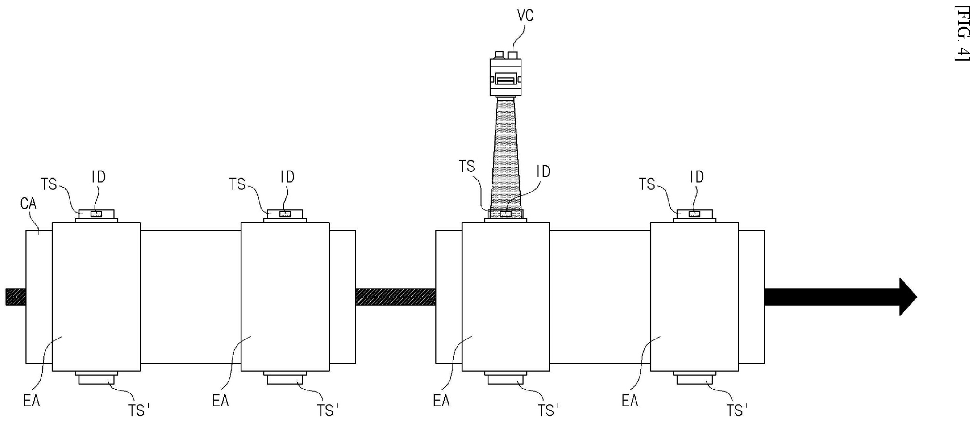

FIG. 4 illustrates a transfer process of an electrode assembly.

Referring to FIGS. 1 and 2, a battery cell 10 includes a cell case 11 and an electrode assembly EA in the cell case 11. The electrode assembly EA is an assembly of electrodes in which a plurality of first electrodes and a plurality of second electrodes that have different polarities are stacked with a separator therebetween. A electrode tab stack TS2 drawn from end portions of the first electrodes is provided on an end portion of the electrode assembly EA. The electrode tab stack TS2 is connected to an electrode lead 13. For example, when the first electrodes are negative electrodes, a first electrode tab (negative electrode tab) stack may be welded to the negative electrode lead 13. When the second electrodes are positive electrodes, a second electrode tab (positive electrode tab) stack TS2' may be welded to a positive electrode lead 13'. End portions of the first electrode tab stack and the second electrode tab stack are not even and thus are cut and welded to the electrode leads. FIGS. 3 and 4 illustrate a first electrode tab stack TS and a second electrode tab stack TS' that have yet to be cut. As shown in FIGS. 1 and 2, a first electrode lead 13 and a second electrode lead 13' may be respectively welded to a remaining part TS2 of the first electrode tab stack and a remaining part TS2' of the second electrode tab stack after end portions of the first electrode tab stack and the second electrode tab stack are cut. Cut parts of the first and second electrode tab stacks may be referred to as first tab parts TS1 and TS1', and remaining parts thereof may be referred to as second tab parts TS2 and TS2'. FIG. 2 illustrates that the first electrode lead 13 is coupled to the second tab part TS2 of the first electrode tab stack TS and the second electrode lead 13' is coupled to the second tab part TS2' of the second electrode tab stack TS'.

A film F may be provided to cover welded regions of the electrode leads and the second tab parts TS2 and TS2' for insulation and protection of the welded regions. The film F may include an insulating tape F1 for covering the welded regions of the electrode leads and the second tab parts, and a lead film F2 for covering lead parts above the welded regions.

As shown in FIGS. 1 and 2, the lead film F2 may be naturally fixed when edges of the cell case 11 that accommodates the electrode assembly EA are sealed. The lead film F2 may prevent the cell case 11 from being in contact with the electrode leads 13 and 13' to improve insulation.

FIGS. 2 to 4 illustrate a bidirectional electrode assembly, in which a first electrode tab stack and a second electrode tab stack are respectively drawn from opposite end portions of the electrode assembly. However, the present invention is also applicable to a unidirectional electrode assembly, in which a first electrode tab stack and a second electrode tab stack are drawn from the same end portion of the electrode assembly.

FIG. 3 illustrates a folding cell FC and a stack cell SC. As described above, the folding cell FC and the stack cell SC are types of an electrode assembly and are different from each other in terms of a method of stacking electrodes and a separator. An identifier (ID) may be provided on an electrode tab T on the folding cell FC.

The stack cell SC may include a fixing tape X for fixing mono-cells MC. An ID may be provided on an electrode tab T of an uppermost mono-cell MC on the stack cell SC. As described above, an ID of the electrode assembly EA may be provided on an external surface of the electrode tab stack. The ID may be not only an electrode ID indicating unique information of an uppermost electrode on the electrode assembly but also a representative ID indicating the electrode assembly including the uppermost electrode, i.e., an electrode assembly ID. As described above, the ID may include information about manufacturing history, e.g., lot numbers, each piece of process equipment, and production line information. The ID may include symbols indicating a sequence number. The symbols may include Arabic numerals but are not limited thereto. The symbols may include arbitrary characters providing information about the sequence number. The ID may be barcode or QR code but is not limited thereto.

In a notching process, an ID may be provided on the negative electrode tabs. The ID may be formed by a method such as laser printing or ink printing. Accordingly, each of the negative electrode tabs may include an ID. Unlike the negative electrode tabs, the positive electrode tabs may not include an ID to prevent defects. However, the present invention is not limited thereto, and an ID may also be assigned to the positive electrode tabs when an appropriate safety device such as a fume dust collector is installed.

In the present specification, an electrode, an electrode tab, and an electrode tab stack each including an ID will be referred to as a first electrode, a first electrode tab, and a first electrode tab stack, respectively. On the other hand, an electrode, an electrode tab, and an electrode tab stack that each do not include an ID will be referred to as a second electrode, a second electrode tab, and a second electrode tab stack, respectively. In the following embodiments, a negative electrode, a negative electrode tab and a negative electrode tab stack will be respectively referred to as a first electrode, a first electrode tab and a first electrode tab stack, and a positive electrode, a positive electrode tab and a positive electrode tab stack will be referred to as a second electrode, a second electrode tab and a second electrode tab stack. However, when an ID is also given to the positive electrode tab, the positive electrode, the positive electrode tab and the positive electrode tab stack may be respectively referred to as a first electrode, a first electrode tab and a first electrode tab stack.

As illustrated in FIG. 4, the electrode assembly EA with the ID may be moved by a transfer device CA for a subsequent process, e.g., an electrode lead welding process. An ID reader may be placed the moved electrode assembly EA, and identify an ID of each electrode assembly. The ID reader may be a barcode reader (BCR) or a vision camera (VC).

However, a part (first tab part) of the electrode tab stack TS including the ID may be cut before being welded with an electrode lead. An end portion of the electrode tab stack is not even and thus is cut before welding. Therefore, the ID may be lost in a series of continuous process lines for coupling the electrode tab stack and the electrode lead, thus making it impossible to identify the electrode assembly EA corresponding to the ID. For this reason, the traceability of the electrode assembly EA and the reliability of the manufacture of a battery cell decrease.

Meanwhile, an electrode assembly input normally into continuous process lines can be tracked without problems even when an ID is physically lost by cutting, because the ID is memorized in, for example, a controller of the continuous process lines. However, it is difficult to track an original ID of an electrode assembly judged to be defective and separated from the continuous process lines. In particular, when an electrode assembly that was judged to be defective but is judged to be available through a second inspection is to be re-input to a process line, it is difficult to identify an original ID of the electrode assembly before defect judgement. Because a plurality of electrode assemblies have passed through the continuous process lines before defect judgement is conducted, thus making it difficult to identify a re-input electrode assembly among the plurality of electrode assemblies. For example, even when a virtual ID is given to the re-input electrode assembly, the re-input electrode assembly cannot be matched with manufacturing history information included in an original physical ID when the original physical ID is not known.

The present invention is to ensure traceability of a battery cell manufacturing process by reallocating the original ID to the re-input electrode assembly through image matching.

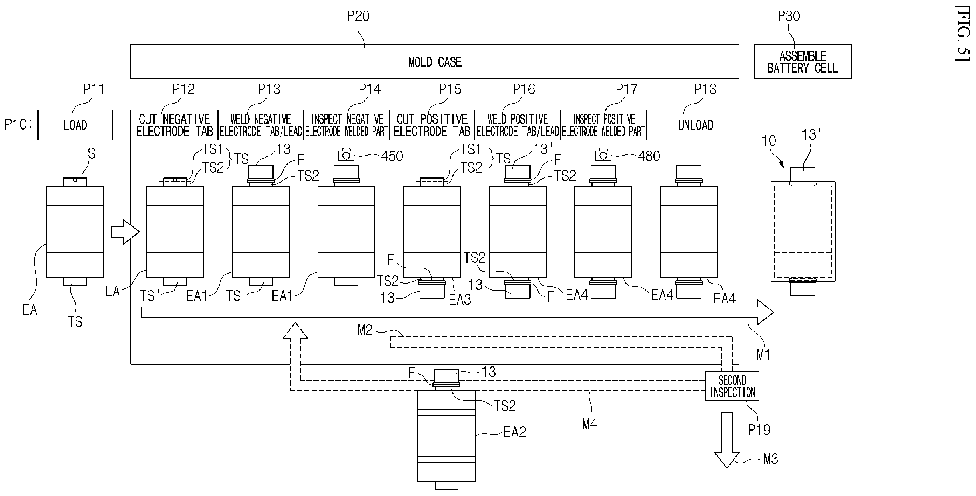

FIG. 5 illustrates a series of continuous process lines according to an example embodiment.

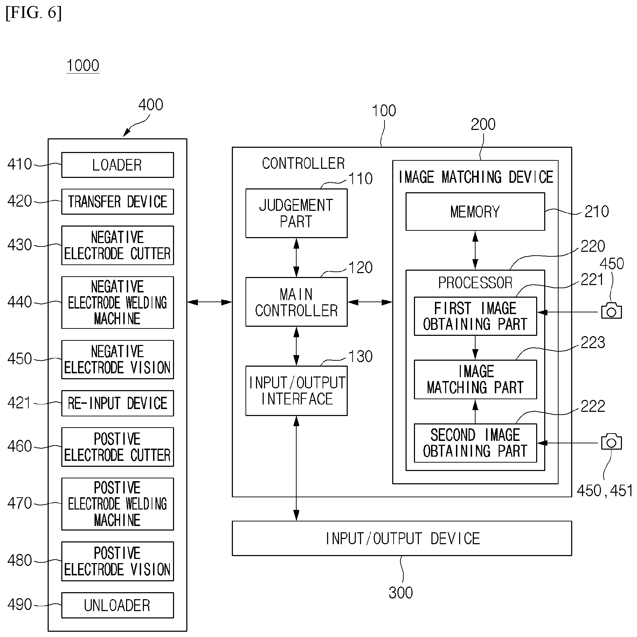

FIG. 6 illustrates a battery cell manufacturing apparatus and a battery cell manufacturing system according to example embodiments.

FIG. 5 illustrates a series of continuous process lines for welding an electrode lead to an electrode assembly EA including a first electrode tab stack TS and a second electrode tab stack TS' at opposite end portions thereof.

A continuous process (P10) includes a loading process (P11) of introducing the electrode assembly EA in a first electrode tab (negative electrode tab) cutting process, the negative electrode tab cutting process (P12), a process of welding a negative electrode tab and a negative electrode lead (P130), a process of inspecting welded parts of the negative electrode tab and the negative electrode lead (P14), a second electrode tab (positive electrode tab) cutting process (P15), a process of welding a positive electrode tab and a positive electrode lead (P16), a process of inspecting welded parts of the positive electrode tab and the positive electrode lead (P17), and an unloading process (P18) of unloading inspected electrode assemblies.

A molding process (P20) of a cell case may be performed in parallel with the continuous process (P10).

An electrode assembly which has been inspected and to which an electrode lead is welded may be unloaded and assembled with the molded cell case 11. Therefore, a battery cell assembly process P30 is performed after the. unloading process

Each device necessary to perform a plurality of processes included in the continuous process (P10) may be provided at a certain position at which a corresponding process is performed.

For example, a loader 410 may be provided to load the electrode assembly EA with an ID to a first electrode cutter.

For example, a first electrode cutter (negative electrode cutter 430) may be provided to cut a negative electrode tab (stack), a negative electrode welding machine (first welding device) 440 may be provided to weld a negative electrode tab and a negative electrode lead, and a first electrode inspection camera may be provided to inspect a welded part of a negative electrode.

In addition, a second electrode cutter (positive electrode cutter 460) may be provided to cut a positive electrode tab (stack), a positive electrode welding machine (second welding device) 470 may be provided to weld a positive electrode tab and a positive electrode lead, and a second electrode inspection camera may be provided to inspect a welded part of a positive electrode.

A vision camera that includes a vision sensor and a processor capable of processing images and thus is capable of internally analyzing and processing an obtained image may be used as the first electrode inspection camera and the second electrode inspection camera. For example, a machine vision camera or a smart camera may be used as vision camera. Vision cameras are used to inspect defects of products in various industries and thus a detailed description thereof is omitted here. FIGS. 5 and 6 illustrates a negative electrode vision (camera) 450 as the first electrode inspection camera and a positive electrode vision (camera) 480 as the second electrode inspection camera.

The first welding device and the second welding device may be, for example, ultrasonic welding machines or laser welding machines. The first and second welding devices may weld cut surfaces of an electrode tab stack and an electrode lead, which are to be welded, by applying ultrasonic waves while pressing the surfaces or by emitting laser.

An unloader 490 is provided to discharge an electrode assembly, in which a negative electrode lead and a positive electrode lead have been welded together and inspected, for a subsequent process such as assembling of a battery cell. The unloader may also discharge an electrode assembly judged to be defective. The unloader may be configured to sort and discharge a good-quality electrode assembly and a defective electrode assembly.

The loader and the unloader are equipment commonly used in industrial production lines. In some cases, the loader and the unloader are also referred to as carriers. For example, a loader and an unloader, in which upper and lower conveyors are combined and which are configured to be movable vertically, may be employed.

In addition, a transfer device 420 is provided to move electrode assemblies between devices installed between the loader 410 and the unloader 490. A well-known transfer device such as a conveyor, an adsorption transfer device, and a robot transfer device may be employed as the transfer device 420.

Meanwhile, the continuous process may include a second inspection process (P19) in which electrode assemblies judged to be defective are secondarily inspected (re-inspected) to be sorted out as electrode assemblies judged to be available and electrode assemblies judged to be unavailable. For example, electrode assemblies judged to be defective by the first electrode inspection camera include electrode assemblies that cannot be used due to serious defects such as electrode tab disconnection or welding defects. The electrode assemblies that cannot be used are discharged and discarded.

However, some of the electrode assemblies judged to be defective may be available.

For example, when an electrode assembly was judged to have a defect but a second inspection reveals that the judgment was due to an error or when the defect is a pseudo-defect, the electrode assembly may be available without performing a separate process to fix the defect.

In addition, an electrode assembly, which has a minor defect such as a removable foreign substance on a welded part or an insulating film F on an undesired position on the welded part and thus can be available by an additional process such as by removing the foreign substance or adjusting the position of the insulating film F, may be an available electrode assembly.

Therefore, in the present specification, an electrode assembly that was judged to be defective but is 'available' should be understood to include an electrode assembly that can be re-input to a process line without performing a separate defect fixing process after defect judgement and an electrode assembly that can be re-input to the process line by the defect fixing process.

The second inspection process (P19) may be performed by an operator's naked eyes. Alternatively, the second inspection process (P19) may be performed by a separate inspection device. The inspection device may be a device with higher specifications than at least the first electrode inspection camera and the second electrode inspection camera. Alternatively, the inspection device may be a device that performs an inspection in a different manner from the inspection method of the first and second electrode inspection cameras. Through visual inspection or second inspection by the inspection device, it is possible to identify an electrode assembly that is judged to be defective but is 'available'.

A re-input device 421 may be provided to re-input an electrode assembly judged to be available into the process line. The re-input device 421 may be a part of the transfer device 420 or a separate device. The re-input device 421 may transfer an electrode assembly, which is judged to be available, to a certain position/operation in the continuous process lines.

A shape of an electrode assembly may depend on each of the processes included in the continuous process (P10). In the present specification, for convenience of description, a reference numeral of an electrode assembly is changed according to the progress of a process.

For example, an initial first electrode assembly in which an ID is provided on an electrode tab stack of a first electrode on an end is simply indicated by 'EA'.

The electrode assembly in which a first electrode tab (negative electrode tab) stack is cut and a first electrode lead s welded is referred to as a first electrode assembly and is indicated by 'EA1'.

A first electrode assembly that was judged to be defective by a first inspection but is judged to be available by a second inspection and thus is re-input to the process line is referred to as a second electrode assembly and is indicated by 'EA2'. The first and second electrode assemblies EA1 and EA2 are results obtained by welding a first electrode lead 13 to a second tab part TS2 remaining after cutting of a first tab part TS1 of the first electrode tab stack TS and thus shapes thereof are the same or substantially the same. Therefore, as described below, images (first images) of a first electrode assembly and an image (second image)of a second electrode assembly may be compared to detect a first electrode assembly EA1 corresponding to a first image matching the second image.

An electrode assembly obtained by cutting a second electrode tab stack TS' of a first electrode assembly EA1 judged to be a good-quality product will be referred to as third electrode assembly and indicated by 'EA3'. An electrode assembly obtained by welding a second electrode lead 13' to the third electrode assembly EA3 will be referred to as a fourth electrode assembly and indicated by 'EA4'.

As described below, when the second electrode tab stack cutting process (P15) and the second electrode lead welding process (P16) are performed by image matching on the second electrode assembly EA2 to which the ID of the first electrode assembly EA1 is allocated, the second electrode assembly EA2 may become the third electrode assembly EA3 and the fourth electrode assembly EA4.

In FIG. 5, the flow of a general electrode assembly that is not judged to be defective and is moved from the loader 410 to the unloader 490 is indicated by an arrow M1. The flow of electrode assemblies judged to be defective by the first electrode inspection camera 450 is indicated by a dashed line M2. The flow of electrode assemblies that cannot be used and thus are discarded among these electrode assemblies is indicated by arrow M3. The flow of an electrode assembly (second electrode assembly) that is judged to be available by a second inspection and thus is re-input is indicated by a dashed-line arrow M4.

Referring to FIG. 6, a battery cell manufacturing apparatus of the present invention may include: an image matching device 200 including a first image obtaining part 223 configured to obtain first images of first electrode assemblies EA1 each including on one end a tab stack TS of a first electrode and a first electrode lead 13 welded to the tab stack TS; a second image obtaining part 222 configured to obtain a second image of a second electrode assembly EA2 judged to be available by a re-inspection among first electrode assemblies judged to be defective by an inspection based on the first images, and an image matching part 223 configured to compare the second image with the first images and extract a first image matching the second image; and an ID allocation device configured to allocate an ID of a first electrode assembly EA1 corresponding to the first image matching the second image as an ID of the second electrode assembly EA2.

As shown in FIG. 4, an ID of an electrode assembly EA may be identified by an ID reader before the electrode assembly EA in a transfer process before the continuous process (P10). Alternatively, the ID may be identified by the ID reader in a loading process or some processes included in the continuous process (P10). Information about the identified ID may be stored in a controller 100 of the continuous process lines or a separate ID management server capable of conducting data communication with the controller 100. When the electrode assembly is processed through a plurality of processes in the continuous process, the controller 100 may control the processing of the electrode assembly based on the ID. In this case, even when the ID is lost by cutting the first tab part, the controller 100 may perform a plurality of processes on the electrode assembly, based on the stored ID.

However, when the second electrode assembly EA2 that was judged to be defective but is judged to be available through the second inspection is to be re-input to continuous process lines, it is difficult to identify an original ID of a first electrode assembly EA1 corresponding to the second electrode assembly EA2 before defect judgement. Because a plurality of first electrode assemblies EA1 have passed through the continuous process lines before defect judgement, it is difficult to determine a first electrode assembly EA1 identical to the re-input second electrode assembly EA2 among the plurality of first electrode assemblies EA1. For example, even when a virtual ID is given to the re-input second electrode assembly EA2, the re-input second electrode assembly EA2 cannot be matched to manufacturing history information included in the original physical ID marked on the corresponding first electrode assembly EA1 when the original physical ID is not known.

The image matching device 200 is configured to detect an original first electrode assembly corresponding to the second electrode assembly EA2 by comparing the first images of the first electrode assembly EA1 for which defect judgement has yet to be performed with the second image of the second electrode assembly EA2 that is re-input after defect judgement.

The ID allocation device may reallocate the ID of the first electrode assembly EA1 corresponding to the first image matching the second image to the second electrode assembly EA2 including the second image by the image matching device 200 to ensure traceability of the battery cell manufacturing process.

Referring to FIG. 6, the image matching device 200 may include a memory 210 and a processor 220 to communicate with other devices.

The memory 210 is a medium in which instructions executable by the processor 220 are stored. The memory 210 may be a non-transitory computer-readable medium. Examples of the non-transitory computer-readable medium include RAM, ROM, solid-state storage media, optical storage media, and magnetic storage media. The memory 210 may include a volatile memory such as RAM and/or a nonvolatile memory such as a ROM and a storage medium. Examples of the storage medium include solid-state storage media (e.g., solid state drives and/or removable flash memories), optical storage media (e.g., optical disks), and magnetic storage media (e.g., hard disk drives). The above-described instructions (e.g., software or computer readable code) may be stored in a volatile component and/or a nonvolatile component of the memory 210.

Image matching may be implemented by the processor 220 of the image matching device 200 as shown in FIG. 6. The processor 220 may be configured to process instructions of a computer program by performing basic arithmetic, logic, and input/output operations. The instructions may be provided to the processor 220 by the memory 210. For example, the processor 220 may be configured to execute a received instruction according to program code stored in a recording device such as the memory 210.

The processor 220 may include a first image matching part 221, a second image matching part 222 and an image matching part 223. According to an embodiment, components of the processor 220 may be selectively separated or merged for representation of functions of a processor.

The first image obtaining part 221 may obtain a first image of a first electrode assembly EA1. The first electrode assembly EA1 is an electrode assembly in which a first electrode tab stack is cut and the first electrode lead 13 is welded. Therefore, the first electrode assembly EA1 includes a second tab part TS2 remaining after the first electrode tab stack is cut, and the first electrode lead 13.

The first image may be obtained by a first electrode inspection camera (negative electrode vision 450) for inspecting a state of a welded part of a negative electrode. As shown in FIG. 5, all first electrode assemblies EA1 may be inspected by the negative electrode vision 450 after welding of a negative electrode lead, and images (first images) thereof may be transmitted to and stored in the controller 100 or a server. The first image obtaining part 221 may obtain the first images directly from the negative electrode vision 450 or obtain the first images stored in the controller 100 or the server.

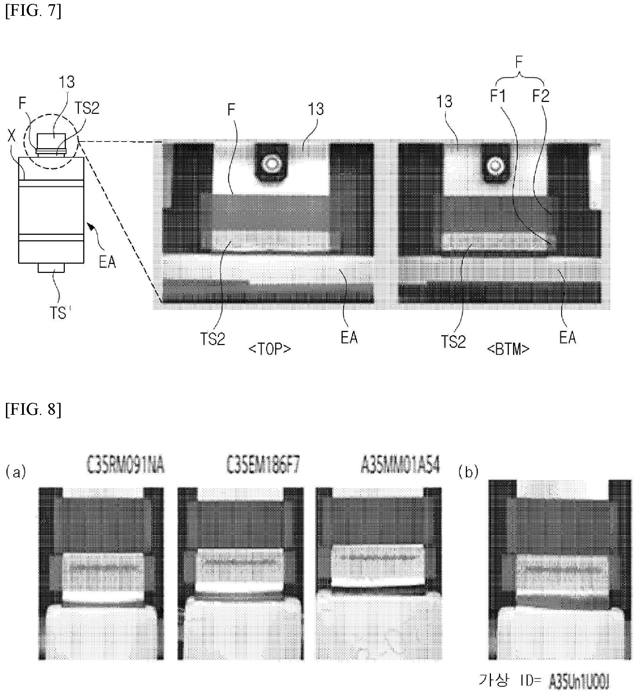

FIG. 7 illustrates a first image of an upper surface and a lower surface of a first electrode assembly.

A first electrode assembly EA1 of FIG. 7 is a stack cell SC with a fixing tape X but image matching may be performed on a folding cell. A second tab part TS2 of a first electrode and a first electrode lead 13 welded to the second tab part TS2 are provided at an upper end of the first electrode assembly EA1. In addition, an insulating film F is attached to the perimeter of a welded part.

A second image of a second electrode assembly EA2 that was judged to be defective but is judged to be available through a re-inspection and thus is re-input to a process line may be obtained from the negative electrode vision 450. For example, the second electrode assembly EA2 may be input again to the negative electrode welding part inspection process (P14) as shown in FIG. 5. A second image of the re-input second electrode assembly EA2 may be captured by the negative electrode vision 450. The captured second image may be transmitted directly from the negative electrode vision 450 to the second image obtaining part 12. Alternatively, a second image stored in the controller 100 or a server may be transmitted to the second image obtaining part 212.

The second image matching part 223 compares the second image with obtained first images and extracts matched images.

Image matching is a technique for comparing two different images with each other to detect matching objects having the same shape. For example, meaningful features in images may be converted into appropriate numbers and the numbers may be compared with each other to determine a similarity between the images. Numbers representative of the features are referred to as feature vectors or feature descriptors. Alternatively, a similarity between two images may be determined by comparing histograms showing distributions of color values of the images. For a comparison using histograms, histogram comparison functions may be used. Various image matching techniques other than those described above are applicable to match between a first image and a second image according to the present invention. Techniques or matching algorithms related to image matching are known and thus a detailed description thereof is omitted here.

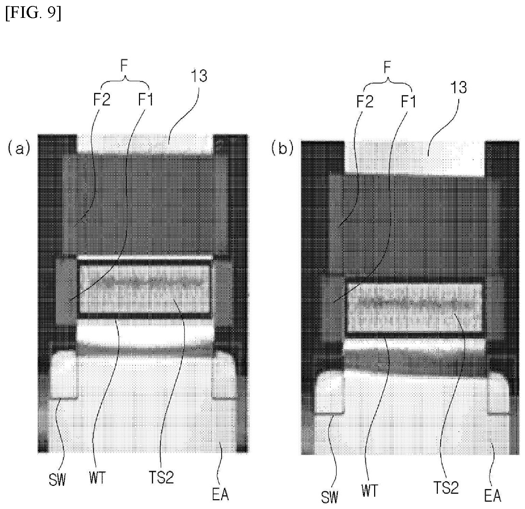

FIG. 8 shows a second image and a plurality of first images, and FIG. 9 illustrates a process of comparing and matching the first images with the second image.

FIG. 8A illustrates first images of a plurality of first electrode assemblies EA1. An ID is allocated to each of the first electrode assemblies EA1. For example, the ID is stored in the controller 100 or an ID management server capable of establishing data communication with the controller 100. The first image obtaining part 221 may obtain the first image in association with the ID of each of the first electrode assemblies EA1. To this end, the first image obtaining part 221 or a processor including the same may perform data communication with the controller 100, especially, a main controller 120 of the controller 100 (see FIG. 6).

FIG. 8B illustrates a second image of a second electrode assembly EA2. A virtual ID may be allocated to the second electrode assembly EA2. The virtual ID may be allocated by, for example, the controller 100 that controls a continuous process. To manage the second electrode assembly EA2 that was judged to be defective through a first inspection but is judged to be available through a re-inspection, the controller 100 may provide a virtual ID to the second electrode assembly EA2 transferred over processes before image matching after the second inspection process. The virtual ID may also be stored in the controller 100 or the ID management server capable of establishing data communication with the controller 100. The second image obtaining part 222 may obtain the second image in association with the virtual ID of the second electrode assembly EA2. To this end, the second image obtaining part 222 or a processor including the same may perform data communication with the controller 100, especially, the main controller 120 of the controller 100 (see FIG. 6).

FIG. 9A illustrates a first image of a first electrode assembly EA1, and FIG. 9B illustrates a second image of a second electrode assembly EA2.

The image matching part 223 may compare and match a first image and a second image each including at least one of:
1) a shape WT of welded regions of an electrode tab stack of a first electrode and an electrode lead;
2) a shape SW of wrinkles of a separator; and
3) a shape of a plurality of overlapping electrode tabs included in the electrode tab stack.

Image matching is a technique for comparing distinguishing parts of images to be compared with each other. For welding an electrode assembly and an electrode lead, a shape of regions of an electrode tab stack of a first electrode and the electrode lead to be welded may be an important feature. FIG. 9 illustrates a trace of welding on a second tab part TS2 of a first electrode tab stack welded to an electrode lead. Thus, a shape WT of a welded region including the trace of welding may be used as a reference for a comparison between images. For example, when traces of welding on images are similar, the images are highly likely to be matched as the same image or similar images.

Alternatively, image matching may be performed through a comparison between shapes SW of wrinkles of separators near welded parts. Generally, a separator is wound around an outermost circumference of an electrode assembly and a part of the separator on the electrode assembly has wrinkles. Therefore, the same image or similar images may be detected through a comparison between shapes of wrinkles of separators on two images.

In an electrode tab stack of a first electrode, a plurality of electrode tabs overlap each other vertically and a shape of the overlapping electrode tabs may depend on an electrode assembly. Therefore, the same image or similar images may be detected through a comparison between shapes of overlapping electrode tabs in electrode tab stacks.

Image matching may be performed based on one or more criteria selected from image matching criteria as described above. Alternatively, image matching may be performed by giving a weight to a more noticeable and important criterion among the above-described criteria. For example, image matching may be performed by allocating a weight of 1 to a shape of welding regions of the electrode tab stack of the first electrode and the electrode lead, a weight of 0.9 to a shape of wrinkles of the separator, and a weight of 0.8 to the shape of overlapping electrode tabs in the electrode tab stack.

Meanwhile, matching between the first image and the second image may also apply not only to first surfaces (upper surfaces) of first and second electrode assemblies but also second surfaces (lower surfaces) thereof. Alternatively, matching may be performed by comparing all images of both the first and second surfaces.

Image matching described above reveals that first one (i.e., the first image of FIG. 9A) among the first images of FIG. 8A matches the second image of FIG. 8B (i.e., the second image of FIG. 9B).

Specifically, the ID allocation device may be the controller 100 that controls the continuous process for welding an electrode lead to an electrode of an electrode assembly or the main controller 120 included in the controller 100. Therefore, the controller 100 or the main controller 120 may allocate the ID of the first electrode assembly EA1 corresponding to the first image matching the second image as an ID of the second electrode assembly EA2 instead of the virtual ID given to the second electrode assembly EA2.

The second electrode assembly to which the ID is allocated is put again into the continuous process lines to perform a subsequent welding process. The controller 100 may identify and manage the second electrode assembly EA2, based on the allocated ID. Accordingly, it is possible to ensure traceability of a battery cell manufacturing process and improve manufacturing reliability

Referring to FIG. 6, the controller 100 may be an integrated control device for controlling a continuous process consisting of a plurality of processes. The controller 100 may include a judgment part 110 for judging opposite parts of electrode assemblies inspected by a first electrode inspection camera and a second electrode inspection camera. According to a judgment of the judgment part 110, moving paths of an electrode assembly judged to be a good-quality product and an electrode assembly judged to be defective may be different from each other in continuous process lines.

The controller 100 may include the main controller to control various types of devices installed in the continuous process lines. The main controller 120 may be, for example, a PLC controller.

The controller 100 may include an input/output interface 130 for communication with an input/output device 300.

As shown in FIG. 6, the image matching device 200 may be included in the controller 100. However, the image matching device 200 may be installed separately from the controller 100.

As shown in FIG. 6, a battery cell manufacturing system 1000 may include a first electrode cutter (negative electrode cutter 430) configured to cut a part of an electrode tab stack on which an ID is provided from a first electrode on one end of an electrode assembly, a first welding device (negative electrode welding machine 440) configured to weld the first electrode lead 13 to a remaining part of the electrode tab stack to manufacture a first electrode assembly EA1, a first electrode inspection camera (negative electrode vision 450) configured to capture a first image of the first electrode assembly EA1, and a battery cell manufacturing apparatus as described above.

The battery cell manufacturing apparatus includes an image matching device 200, and an ID allocation device, e.g., a main controller. Therefore, through the above-described system, the first electrode assembly EA1 may be manufactured, and image matching may be performed on the first electrode assembly EAland a second electrode assembly EA2.

The system may further include a second electrode cutter (positive electrode cutter 460) configured to cut a electrode tab stack of a second electrode of a first electrode assembly EA1 judged to be a good-quality product by the controller 100 and/or an electrode tab stack of a second electrode of a second electrode assembly EA2 to which an ID of the first electrode assembly EA1 is allocated, a second welding device (positive electrode welding machine 470) configured to weld a second electrode lead 13' (positive electrode lead) to a remaining part of the electrode tab stack cut by the second electrode cutter, and a second electrode inspection camera (positive electrode vision 480) configured to capture images of the first electrode assembly EA1 to which the second electrode lead 13' is welded and the second electrode assembly EA2 to which the second electrode lead 13' is welded. Accordingly, through the system, a third electrode assembly EA3 may be obtained by cutting a positive electrode of the first electrode assembly EA1 judged to be a good-quality product and inspected by the negative electrode vision 450, and a fourth electrode assembly EA4 may be obtained by welding a positive electrode lead to the third electrode assembly EA3, inspected by a positive electrode vision and discharged to perform a battery cell assembly process (see FIG. 5).

The system 1000 may further include a loader 410 configured to load electrode assemblies each including an ID on an electrode tab stack of a first electrode on one end thereof to the first electrode cutter, and an unloader 490 configured to unload a first electrode assembly EA1 judged to be defective by the first electrode inspection camera and electrode assemblies inspected by the second electrode inspection camera. Accordingly, the system may introduce electrode assemblies, which have yet to be cut, to the continuous process lines by the loader 410. In addition, inspected electrode assemblies may be discharged for the battery cell assembly process (P30). Alternatively, first electrode assemblies judged to be defective may be discharged to the outside of the continuous process lines.

The system further includes a transfer device 420 configured to transfer electrode assemblies between devices of the system that are installed between the loader 410 and the unloader 490. General electrode assemblies that are not judged to be defective may be transferred from the loader 410 to the unloader 490 by the transfer device 420 as indicated by an arrow M1.

An electrode assembly judged to be defective by the first electrode inspection camera 450 may be transferred toward the unloader 490 by the transfer device 420 as indicated by a dashed line M2. The transfer device 420 may transfer the first electrode assembly EA1 judged to be defective to the unloader while bypassing the second electrode cutter and the second welding device 470. The flow of the electrode assembly indicated by the dashed line M2 represents a bypass transfer in which the first electrode assembly EA1 judged to be defective is transferred to the unloader without going through a positive electrode tab cutting process and a positive electrode tab-positive electrode lead welding process.

The unloader 490 may be configured to sort and discharge a good-quality electrode assembly and a defective electrode assembly.

An electrode assembly to be discarded among electrode assemblies judged to be defective is discharged in a direction of an arrow M3.

The second electrode assembly EA2 that is judged to be available and is to be re-input is moved in a direction of the arrow M2 and is re-input to the continuous process lines.

The system 1000 may further include a re-input device 421 to re-input the second electrode assembly EA2 to a process line. The re-input device 421 may be a part of the transfer device 420 or a separate device.

The system 1000 may include an input/output device 300.

For example, a keyboard, a mouse, a joystick or a touch screen may be used as an input device. For example, a display, a head-up display, an AR display, a VR display or a printer may be used as an output device.

The above-described components of the battery manufacturing system 10 may be connected to each other through one or more buses.

The main controller of the controller 100 may control various types of devices installed in the continuous process lines.

For example, the main controller may instruct to operate the loader 410 to introduce an electrode assembly to the continuous process lines. Alternatively, upon completion of a loading operation and according to the progress of a process, the main controller may instruct to stop the loader 410.

In addition, the main controller may instruct to operate the unloader to discharge an electrode assembly on which an operation is completed to a subsequent assembly process. Upon completion of the loading operation and according to the progress of a process, the controller 100 may instruct to stop the loader.

Similarly, the main controller controls an operation of the transfer apparatus 420. The main controller may instruct to operate or stop the negative electrode cutter, the negative electrode welding machine, the positive electrode cutter, and the positive electrode welding machine.

The main controller may control operations of the negative electrode vision and the positive electrode vision, and store images obtained from the visions or transmit the images to a server.

In addition, the main controller may control an operation of the image matching device 200. The image matching device 200 may obtain and match a first image and a second image in response to an instruction from the main controller. In addition, the image matching device 200 may transmit information (an ID and a virtual ID) about matched images to the main controller, and the main controller may allocate an ID of a first electrode assembly EA1 matching the second electrode assembly EA2 to the second electrode assembly EA2, based on the information.

### [Embodiments of the Present Invention]

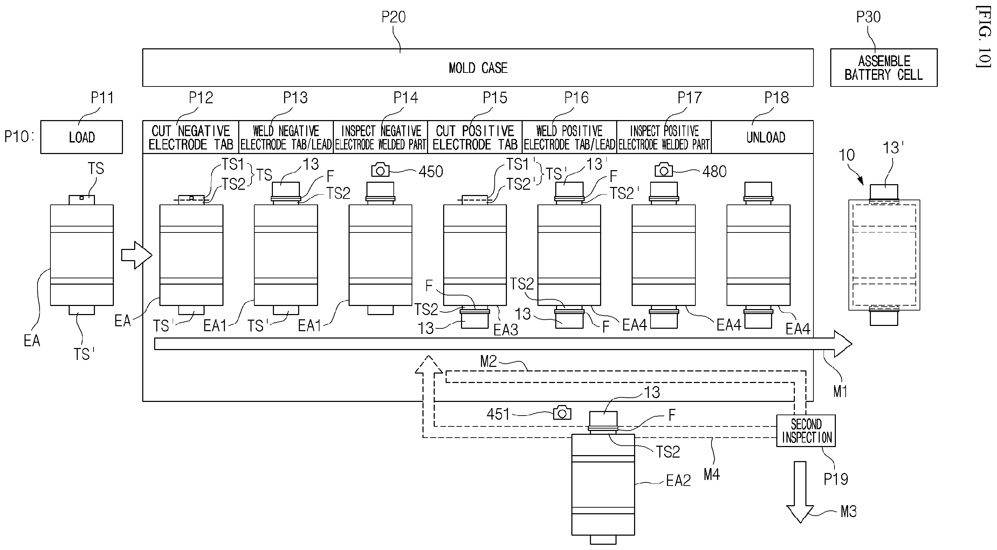

FIG. 10 illustrates a series of continuous process lines according to an example embodiment.

A second image may be obtained by a first electrode inspection camera (negative electrode vision 450) of an inspection process of a welded part of a negative electrode as shown in FIG. 5.

Alternatively, the second image may be obtained by a separate first electrode inspection camera 451. For example, the second electrode assembly EA2 may be photographed by a separate first electrode inspection camera 451 installed before the second electrode assembly EA2 is re-input to the continuous process. In this case, the second image of the second electrode assembly EA2 has already been obtained and thus need not be transmitted to the negative electrode vision 450 in the continuous process as shown in FIG. 5. That is, in this case, as shown in FIG. 10, the second electrode assembly EA2 may be re-input at a position after negative electrode welded part inspection process. Therefore, the continuous process may be carried out without interfering with inspection of another first electrode assembly EA1 through the negative electrode vision 450 provided in the continuous process lines, thereby preventing delay in the process.

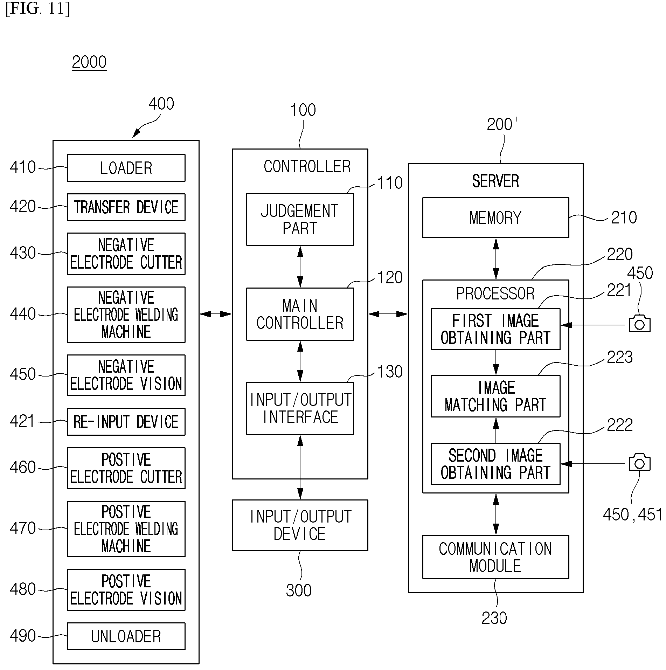

FIG. 11 illustrates a battery cell manufacturing apparatus and a battery cell manufacturing system according to example embodiments.

FIG. 11 illustrates that the image matching device 200 is installed separately from the controller 100. An image matching device may be in the form of a server separated from the controller 100. A server 200' which is an image matching device may include a memory 210 and a processor 220. The processor 220 may include a first image matching part 221, a second image matching part 222 and an image matching part 223 as described above.

In addition, the server 200' may include a communication module 230 capable of communicating with the controller 100 or other computing devices.

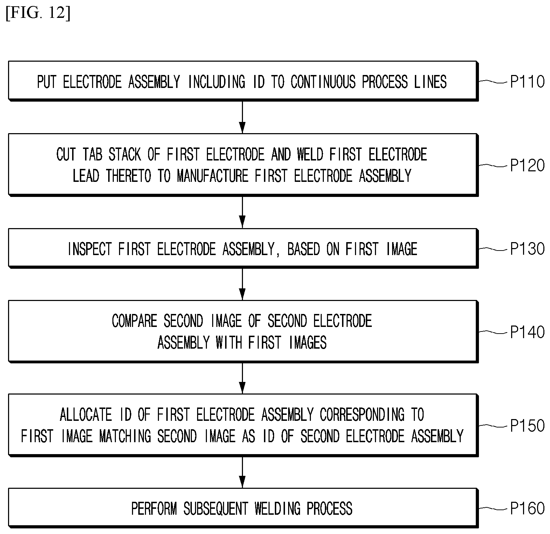

FIG. 12 illustrates a battery cell manufacturing method according to example embodiments.

The battery cell manufacturing method may be performed in a series of continuous process lines.

Referring to FIGS. 5, 6, 10, 11, and 12, in operation P110, an electrode assembly with an ID may be input to the continuous process lines. For example, an electrode assembly in which an ID on an electrode tab stack of a first electrode is identified by the controller 100 may be input to a continuous process by the loader 410.

In operation P120, a part (first tab part) on which the ID is provided may be cut from an electrode tab stack of a first electrode on an end of the electrode assembly, and the first electrode lead 13 (e.g., a negative electrode lead) may be welded to a remaining part (second tab part) after the part is cut.

The electrode assembly may be transferred to a negative electrode cutter by the transfer device 420 to cut the first tab part. In addition, the electrode assembly cut by the transfer device 420 may be transferred to a negative electrode welding machine to weld a negative electrode lead to the second tab part. The controller 100 may control a cutting process and a negative electrode tab-lead welding process as described above. A first electrode assembly EA1 is manufactured by welding the negative electrode lead to the second tab part.

In operation P130, a first image of the first electrode assembly EA1 is obtained by a negative electrode vision, and the first electrode assembly EA1 is inspected based on the obtained first image. A welding defect or other defects of a negative electrode may be identified based on the first image. The controller 100 may inspect the negative electrode based on the first image obtained from the negative electrode vision, and the judgment part of the controller 100 may judge whether the negative electrode is defective or not.

The first electrode assembly EA1 judged to be a good-quality product by the inspection is transferred for a second electrode tab (positive electrode tab) cutting process. In the cutting process, a positive electrode tab stack of the first electrode assembly EA1 is cut by a positive electrode cutter. The cut electrode assembly (third electrode assembly) is transferred for a positive electrode tab-lead welding process by the transfer device 420, and a positive electrode lead is welded to a second tab part of a positive electrode tab stack by a positive electrode welding machine in this process. The controller 100 may control a cutting process and a positive electrode tab-lead welding process as described above.

The electrode assembly (fourth electrode assembly) to which both the negative electrode lead and the positive electrode lead are welded is transferred to the positive electrode vision and is inspected. The fourth electrode assembly in which the welded positive electrode is judged to be a good-quality product by the positive electrode vision is discharged by an unloader. The discharged fourth electrode assembly is transferred for the battery cell assembly process. In the assembly process, the fourth electrode assembly is accommodated in a cell case molded in a case molding process. The transfer flow of the electrode assembly is indicated by an arrow of M1 in FIGS. 5 and 10.

The first electrode assembly EA1 judged to be defective in a negative electrode welded part inspection operation may be discharged from the continuous process lines without cutting the second electrode tab stack and welding a second electrode lead 13'. The dashed line M2 of FIGS. 5 and 10 shows bypass transfer of the first electrode assembly EA1 judged to be defective.

The first electrode assembly EA1 judged to be defective is inspected again in a second inspection process. The first electrode assembly EA1 when judged to be unavailable in the second inspection process is discharged to the outside. The flow of the electrode assembly is indicated by an arrow M3 in FIGS. 5 and 10. The first electrode assembly EA1 judged to be available in the second inspection process is regarded as a second electrode assembly EA2. The controller 100 may allocate a virtual ID to the second electrode assembly EA2. The second electrode assembly EA2 to which the virtual ID is allocated may be re-input to the continuous process lines by an re-input device.

The second electrode assembly EA2 may be re-input to the negative electrode welded part inspection process, and a second image thereof may be captured by the negative electrode vision (see FIG. 5)

Alternatively, a first electrode inspection device 451 may be installed separately from the negative electrode vision in a path in which the second electrode EA2 is re-input after the second inspection process to obtain the second image of the second electrode assembly EA2 by the first electrode inspection device 451 (see FIG. 10).

The virtual ID allocated to the re-input second electrode assembly EA2 may be stored in the controller 100 or a server in association with the second image.

Referring back to FIG. 12, in operation P140, the second image of the second electrode assembly EA2 may be compared with first images of a plurality of first electrode assemblies that was obtained before the second image.

The image matching device 200 included in the controller 100 or the mage matching device (e.g., the server 200') installed separately from the controller 100 includes a processor that includes the first image obtaining part 221, the second image obtaining part 222 and the image matching part 223. The image matching part 223 may compare first images received from the first image obtaining part 221 with a second image received from the second image obtaining part 222 according to a certain matching algorithm to select a first image most similar to the second image as an image matching the second image.

According to example embodiments, a first image and a second image each including at least one of shapes described below may be compared and matched.
1) a shape of welded regions of the electrode tab stack of the first electrode and an electrode lead;
2) a shape of wrinkles of a separator; and
3) a shape of a plurality of overlapping electrode tabs included in the electrode tab stack.

Alternatively, the first and second images may be matched by allocating a weight to at least one of the above-described shapes serving as criteria for a comparison between the first and second images.

In operation P150, the controller 100 or the main controller included in the controller 100 may allocate an ID of a first electrode assembly EA1 corresponding to the first image matching the second image as an ID of the second electrode assembly EA2.

In this case, the controller 100 or the main controller included in the controller 100 may allocate the ID of the first electrode assembly EA1 corresponding to the first image matching the second image as an ID of the second electrode assembly EA2 instead of the virtual ID. The controller 100 or the main controller that allocates an ID serves as an ID allocation device.

In operation P160, the second electrode assembly EA2 to which the ID is allocated is moved to a subsequent welding process such as a process of welding the second electrode lead 13' to a tab stack of a second electrode included in the second electrode assembly EA2. That is, in the second electrode assembly EA2, a first tab part of the tab stack of the second electrode is cut by the positive electrode cutter and a remaining second tab part of the tab stack remaining is welded to the positive electrode lead by the positive electrode welding machine. The electrode assembly (fourth electrode assembly) to which the positive electrode lead is welded is inspected by the positive electrode vision. The electrode assembly when judged to be a good-quality product by an inspection is discharged by the unloader.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

### (Reference Numerals)

1000, 2000: battery manufacturing system
100: controller
110: judgment part
120: main controller
130: input/output interface
200: image matching device
200': server
210: memory
220: processor
221: first image obtaining part
222: second image obtaining part
223: image matching part
10: battery cell
EA: electrode assembly
EA1: first electrode assembly
EA2: second electrode assembly
EA3: third electrode assembly
EA4: fourth electrode assembly

## Claims

1. A battery cell manufacturing apparatus comprising:
a first image obtaining part configured to obtain first images of first electrode assemblies including on one end an electrode tab stack of a first electrode and a first electrode lead welded to the electrode tab stack;
a second image obtaining part configured to obtain a second image of a second electrode assembly judged to be available by a re-inspection among first electrode assemblies judged to be defective by an inspection based on the first images;
an image matching device including an image matching part configured to compare the second image with first images and extract first imagesmatching the second image; and
an identifier (ID) allocation device configured to allocate an ID of a first electrode assembly corresponding to the first image matching the second image as an ID of the second electrode assembly.

2. The battery cell manufacturing apparatus of claim 1, wherein the ID allocation device comprises a controller of a series of continuous process lines for welding an electrode lead to an electrode included in an electrode assembly or a main controller included in the controller.

3. The battery cell manufacturing apparatus of claim 1, wherein the ID allocation device allocates a virtual ID to the second electrode assembly before the matching of the first image to the second image, and allocates the ID of the first electrode assembly corresponding to the first image matching the second image as an ID of the second electrode assembly instead of the virtual ID.

4. The battery cell manufacturing apparatus of claim 3, wherein the first image obtaining part obtains the first image in connection with the ID of the first electrode assembly, and
the second image obtaining part obtains the second image in connection with the virtual ID of the second electrode assembly.

5. The battery cell manufacturing apparatus of claim 1, wherein the image matching part compares and matches the first image and the second image each including at least one of:
1) a shape of welded regions of the electrode tab stack of the first electrode and the first electrode lead;
2) a shape of wrinkles of a separator; and
3) a shape of a plurality of overlapping electrode tabs included in the electrode tab stack.

6. A battery cell manufacturing system comprising:
a first electrode cutter configured to cut a part of an electrode tab stack of a first electrode on which an ID is provided, the first electrode being on an end of an electrode assembly;
a first welding device configured to weld a first electrode lead to a remaining part of the electrode tab stack to manufacture first electrode assemblies;
a first electrode inspection camera configured to capture first images of the first electrode assemblies; and
the battery cell manufacturing apparatus of claim 2.

7. The battery cell manufacturing system of claim 6, further comprising:
a second electrode cutter configured to cut at least one electrode tab stack among an electrode tab stack of a second electrode included in the first electrode assemblies judged to be a good-quality product by the controller and an electrode tab stack of a second electrode included in a second electrode assembly to which an ID of the first electrode assembly is allocated;
a second welding device configured to weld a second electrode lead to a remaining part of the at least one electrode tab stack cut by the second electrode cutter; and
a second electrode inspection camera configured to capture images of the first electrode assembly to which the second electrode lead is welded and the second electrode assembly to which the second electrode lead is welded.

8. The battery cell manufacturing system of claim 6, further comprising:
a loader configured to load electrode assemblies on the first electrode cutter, the electrode assemblies each including an ID on an electrode tab stack of a first electrode on one end; and
an unloader configured to unload the first electrode assembly judged to be defective by the first electrode inspection camera and electrode assemblies inspected by the second electrode inspection camera.

9. The battery cell manufacturing system of claim 8, further comprising a transfer device configured to move electrode assemblies between devices of a system installed between the loader and the unloader,
wherein the transfer device transfers the first electrode assembly judged to be defective to the unloader by bypassing the second electrode cutter and the second welding device.

10. The battery cell manufacturing system of claim 8, further comprising a re-input device configured to re-input to a series of continuous process lines a second electrode assembly judged to be available by a re-inspection among the first electrode assemblies judged to be defective and discharged by the unloader.

11. A battery cell manufacturing method comprising:
manufacturing first electrode assemblies by cutting a part of an electrode tab stack of a first electrode on an end of an electrode assembly and welding a first electrode lead to a remaining part of the electrode tab stack, wherein first electrodes and second electrodes are stacked on the electrode assembly with a separator interposed between the first and second electrodes;
inspecting the first electrode assemblies, based on an obtained first images of the first electrode assemblies;
comparing first images of first electrode assemblies with an obtained second image of a second electrode assembly judged to be available by a re-inspection among first electrode assemblies judged to be defective in the inspecting of the first electrode assemblies; and
allocating an ID of a first electrode assembly corresponding to a first image matching the second image as an ID of the second electrode assembly.

12. The battery cell manufacturing method of claim 11, further comprising allocating a virtual ID to the second electrode assembly,
wherein the virtual ID is related to the second image.

13. The battery cell manufacturing method of claim 12, wherein the ID of the first electrode assembly corresponding to the first image matching the second image is allocated as an ID of the second electrode assembly instead of the virtual ID.

14. The battery cell manufacturing method of claim 11, wherein the first image and the second image, which are compared and matched with each other, each comprise at least one shape of:
1) a shape of welded regions of the electrode tab stack of the first electrode and the first electrode lead;
2) a shape of wrinkles of a separator; and
3) a shape of a plurality of overlapping electrode tabs included in the electrode tab stack.

15. The battery cell manufacturing method of claim 14, wherein the first and second images are matched by allocating a weight to the at least one shape serving as a criterion for a comparison between the first and second images.

16. The battery cell manufacturing method of claim 11, wherein the battery cell manufacturing method is performed in a series of continuous process lines, and
first electrode assemblies judged to be a good-quality product in the inspecting of the first electrode assemblies is transferred to a process of welding an electrode tab stack of each of the second electrodes to a second electrode lead.

17. The battery cell manufacturing method of claim 16, wherein first electrode assemblies judged to be defective in the inspecting of the first electrode assembly is discharged from the continuous process lines without performing the process of welding the electrode tab stack of each of the second electrodes to the second electrode lead.

18. The battery cell manufacturing method of claim 17, further comprising re-inspecting the first electrode assemblies, which are judged to be defective and are discharged, and determining the first electrode assembly as a second electrode assembly to be re-input to the continuous process lines when the first electrode assemblies is judged to be available.

19. The battery cell manufacturing method of claim 8, wherein the second electrode assembly is re-input to the inspecting of the first electrode assemblies to obtain a second image or is re-input after the inspecting of the first electrode assemblies when the second image is obtained.

20. The battery cell manufacturing method of claim 19, wherein the second electrode assembly which is re-input and to which the ID of the first electrode assembly is allocated is transferred to a process of welding the electrode tab stack of each of the second electrodes and the second electrode lead.
